# EUROPEAN PATENT APPLICATION

(11) **EP 2 915 471 A1**
(43) Date of publication of application: **09.09.2015**
(21) Application number: 15157589.1
(22) Date of filing: 04.03.2015
(51) Int. Cl.: A47K 10/42, A47K 10/18

(54) **Wipe container holder and wipe dispenser**

(30) Priority: 06.03.2014 JP 2014043937
(71) Applicant: Yamada, Kikuo, Shinagawa-ku Tokyo 141-0022 (JP)
(72) Inventor: Yamada, Kikuo, Shinagawa-ku Tokyo 141-0022 (JP)
(74) Representative: Ishiguro, Masaoki

(57) **Abstract**

The present invention provides a wipe container holder and a wipe dispenser that can be handled with ease and used in a wide variety of ways. The wipe container holder includes a seat plate, and a back plate and a side plate erected on the seat plate, and a fixing portion for fixing a wipe container is provided on at least one of the seat plate, the back plate, and the side plate.

## Description

### BACKGROUND OF THE INVENTION

### 1. Field of the Invention

The present invention relates to a wipe container holder and a wipe dispenser. Note that in the present invention, a "wipe" refers to a wiping material, and more particularly to a flexible fiber sheet to which a chemical fluid has been added, and which is used to wipe away unwanted matter from a solid surface, such as a moistened tissue, a body washing wipe, a make-up remover wipe, or a toilet seat cleaning wipe, for example.

### 2. Description of the Related Art

Wipe products made of fiber sheets impregnated with chemicals in the form of moisture, alcohol, and so on, such as moistened tissues and moistened sheets, are used in various applications such as cleaning and wiping. Wipes impregnated with fluid of this type may be stored in various forms. Conventional forms of storage include, for example, so-called bottle type storage, in which a single long line of wipes connected by perforations is stored in a cylindrical plastic bottle, and so-called bag type storage, in which a wipe stack formed by stacking a large number of wipes is stored in a bag made of plastic film (see Japanese Patent Application Publication 2013-49456 and Japanese Patent Application Publication H9-156676, for example).

### SUMMARY OF THE INVENTION

The bottle type wipe dispenser described above is configured such that when an end wipe connected to a following wipe is pulled out of the bottle, only the endmost wipe is separated at the perforations by resistance applied to the wipe at that time, and as a result, the endmost wipe is extracted singly. However, considerable force is required to pull the wipes out of the bottle type wipe dispenser one at a time. Furthermore, when a wipe is pulled out of the bottle type wipe dispenser, a tip end of the wipe must be held with one hand while the bottle is held firmly with the other hand. A large amount of effort is therefore likely to be required to pull out a wipe, making the wipe dispenser particularly difficult for the elderly and so on to use.

In contrast to the bottle type wipe dispenser, little force is required to pull a wipe out of the bag type wipe dispenser, in which the wipes are stacked independently and separately and stored in a bag made of plastic film, and therefore a wipe can be extracted with one hand. However, the bag type wipe dispenser is used while placed horizontally on a table or the like so that an extraction port through which the wipes are extracted faces upward, and therefore the wipe dispenser is aesthetically displeasing and requires more space than the bottle type. Since more space is required, the bag type wipe dispenser cannot be installed in a narrow space such as a toilet, for example, and therefore a user must go to the trouble of carrying in the wipe dispenser during each use. When the bag type wipe dispenser is simply placed vertically so that the extraction port faces frontward, on the other hand, it becomes difficult to open and close a lid thereof, and when the lid is open, the stack of wipes stored in the interior may fall out. To prevent this, it may be necessary for the user to go to the trouble of extracting a wipe by holding the tip end of the wipe with one hand while preventing the stack of wipes from falling out with the other hand. Moreover, some users prefer to use a vertical wipe dispenser such as the conventional bottle type wipe dispenser, and it is impossible to cater for the needs of these users with the bag type wipe dispenser.

The present invention has been designed in consideration of these problems, and an object thereof is to provide a wipe container holder and a wipe dispenser that can be handled with ease and used in a wide variety of ways.

A wipe container holder according to the present invention is:
(1) A wipe container holder including a seat plate, and a back plate and a side plate erected on the seat plate, wherein a fixing portion for fixing a wipe container is provided on at least one of the seat plate, the back plate, and the side plate;
(2) The wipe container holder described above in (1), wherein the side plate is formed in a pair;
(3) The wipe container holder described above in (1) or (2), wherein the fixing portion is formed to project further inward than inside surfaces of the side plates;
(4) The wipe container holder described above in any of (1) to (3), wherein the seat plate is formed to extend further frontward than the side plates; and
(5) The wipe container holder described above in any of (1) to (4), wherein an attachment portion with which the wipe container holder can be attached to a location for installing the wipe container holder is provided on one of the seat plate, the back plate, and the side plates.

Further, a wipe dispenser according to the present invention is:
(6) A wipe dispenser in which the wipe container holder described above in any of (1) to (5) holds a wipe container; and
(7) The wipe dispenser described above in (6), wherein a wipe stack formed by stacking a plurality of wipes is housed in an interior of the wipe container, an orifice is provided in the wipe container to apply resistance to a wipe extracted from the wipe container, and a biasing force is exerted on an orifice member in which the orifice is formed from a wipe extraction hole side in a direction for pressing the orifice member against a front surface of the wipe stack such that when the wipe is pulled out through the wipe extraction hole, leading to a reduction in a height of the wipe stack, the orifice member is pressed against the front surface of the wipe stack by the biasing force.

According to the present invention, the fixing portion for fixing the wipe container is provided on at least one of the seat plate, the back plate, and the side plate, and therefore the wipe container can be fixed securely to the wipe container holder. Hence, the wipe container does not become detached from the wipe container holder even when the user handles the wipe container, and as a result, the wipe container holder and the wipe dispenser can be handled with ease. Furthermore, the wipe container holder and wipe dispenser according to the present invention can be installed easily in a narrow space, thereby eliminating troublesome handling operation such as carrying in the wipe container holder and wipe dispenser during each use, and as a result, the wipe container holder and wipe dispenser can be used comfortably.

### BRIEF DESCRIPTION OF THE DRAWINGS

FIG. 1 is a front view of a wipe dispenser according to the present invention;
FIG. 2 is an exploded perspective view of the wipe dispenser;
FIG. 3 is an A-A sectional view of FIG. 1;
FIG. 4 is an illustrative view illustrating actions and effects of an orifice member;
FIG. 5 is a perspective view showing a configuration of a wipe container holder according to the present invention; and
FIG. 6 is a perspective view showing a configuration of a modified example of the wipe container holder.

### DESCRIPTION OF THE PREFERRED EMBODIMENTS

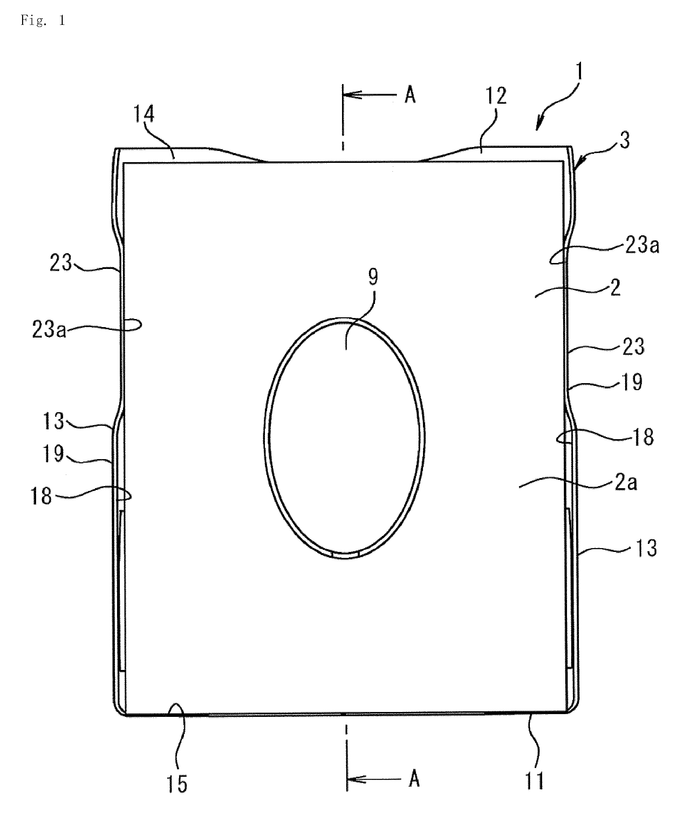

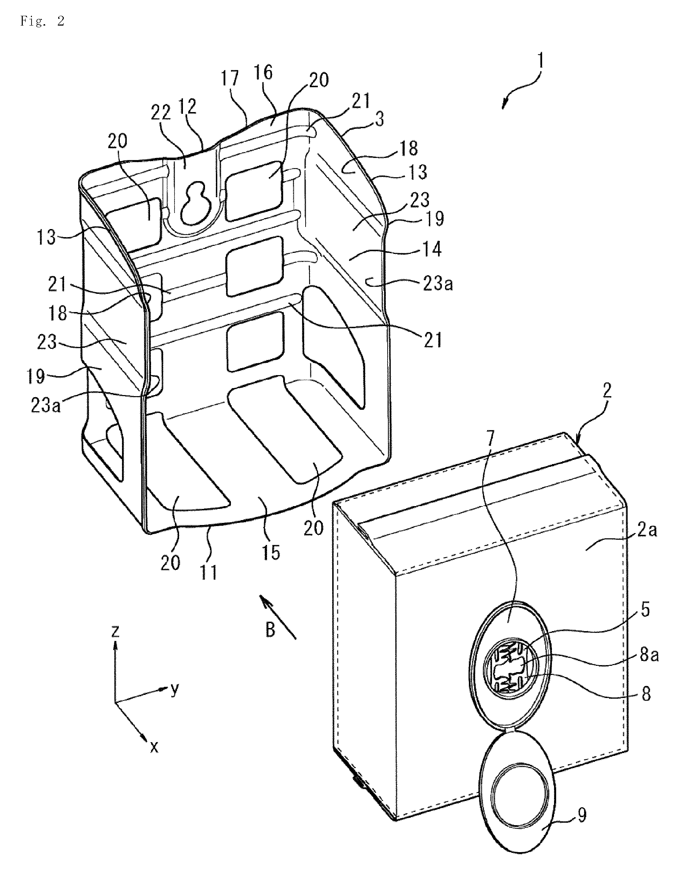

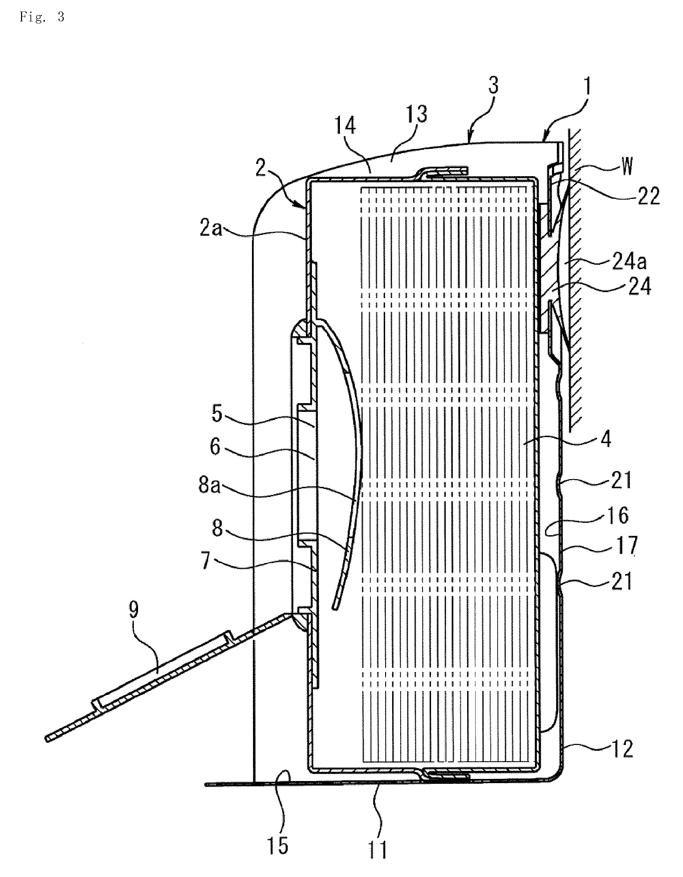

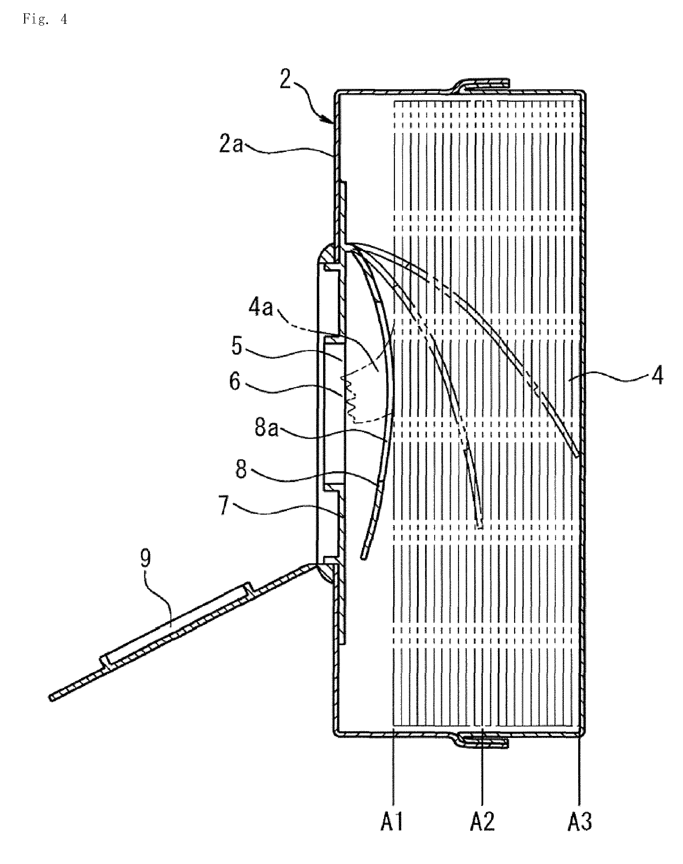

A configuration of a wipe dispenser 1 according to the present invention will now be described on the basis of FIGS. 1 to 4. FIG. 1 is a front view showing an embodiment of the wipe dispenser 1 according to the present invention. FIG. 2 is an exploded perspective view of the wipe dispenser 1. FIG. 3 is an A-A sectional view of FIG. 1. FIG. 4 is an illustrative view of a wipe container.

The wipe dispenser 1 is configured such that a wipe container holder 3 holds a wipe container 2. The wipe container 2 is formed in a substantially rectangular parallelepiped shape, and a wipe stack 4 formed by stacking a plurality of wipes 4a is stored therein. Further, a wipe extraction hole 5 for extracting a single wipe 4a from the wipe stack 4 is provided in the wipe container 2 in a central position of a front surface portion 2a of the wipe container 2. Note that the wipe container 2 may be formed in a bag shape, for example, and made of plastic or the like, but is not limited thereto. An example in which the wipe container 2 is formed in a bag shape will be described below.

The wipe container 2 is formed in a bag shape from airtight, bendable plastic film or the like, and is sealed so as to be airtight using a heat seal or the like in all parts except for an opening portion 6 formed in the front surface portion 2a. Note that when the wipe container 2 is formed in a bag shape, the wipe container 2 may have a single-layer structure or a multilayer laminated structure.

An extraction hole member 7 formed from a rigid plastic material is adhered in an airtight fashion to the opening portion 6 of the wipe container 2. The wipe extraction hole 5 through which the wipes 4a are extracted is formed in an inside part of the extraction hole member 7. Further, in the extraction hole member 7, an orifice member 8 having an orifice 8a for applying resistance to the wipe 4a pulled out of the wipe container 2 is disposed in the wipe extraction hole 5. Note that in the present invention, the orifice member 8 may take any form, and there are no limitations on the shape and so on thereof.

A lid 9 that is freely opened and closed is provided in the extraction hole member 7 so that the wipe extraction hole 5 can be closed and opened from the outside. When the lid 9 is closed, the interior of the wipe container 2 is substantially shielded from outside air, and therefore the wipe stack 4 can be prevented from drying out.

The wipe stack 4 stored in the wipe container 2 is formed by continuously overlapping and aligning a plurality of folded wipes 4a. The wipe stack 4 is formed by, for example, folding the individual, independent wipes 4a with a so-called Z fold or the like and overlapping the wipes 4a so that respective end portions of adjacent wipes 4a are aligned. The wipe stack 4 is not limited to this configuration, however, and for example, the wipes may be constituted by a single long line of wipes connected by perforations, or may be configured otherwise. Furthermore, the wipes may be folded in a form other than the aforesaid Z fold.

The wipe 4a is a fiber sheet molded using paper, woven fabric, non-woven fabric, or the like, which is impregnated with a chemical fluid or the like. Examples of the chemical fluid or the like include alcohol, water, or a mixture thereof, into which may be blended a perfume, an antibacterial agent, a deodorant, a surfactant, an antiseptic, a dye, an antifoaming agent, an antioxidant, a clarifier, a solubilizing agent, and so on. Base fabrics constituted by different materials, different chemical fluids, and so on may also be used. Note that the fiber sheet is formed from synthetic fiber and/or natural fiber, for example, but is not limited thereto.

Since adjacent wipes 4a are overlapped and aligned, when one wipe 4a is pulled from the wipe stack 4, the following wipe 4a moves after the foremost wipe 4a. The foremost wipe 4a is separated from the following wipe 4a by resistance applied to the wipe 4a as the wipe 4a passes through the orifice 8a, and as a result, the foremost wipe 4a is extracted alone.

The orifice member 8 is supported in a cantilevered fashion within the wipe container 2 so as to move toward a bottom surface of the wipe container 2 opposite the wipe extraction hole 5 in accordance with a reduction in a height of the wipe stack 4 accompanying extraction of the wipe 4a through the wipe extraction hole 5. The orifice member 8 extends so as to tilt diagonally toward the bottom surface from a predetermined position on a base end side toward a free end side. The orifice member 8 is shaped such that in a natural, unbiased condition, the free end thereof is positioned below a bottom portion of the wipe container. When pressed against a front surface of the wipe stack 4, however, the orifice member 8 elastically deforms from this natural condition, and as a result of a force generated by this elastic deformation, a biasing force is applied to the wipe stack 4.

As shown in FIG. 4, when the front surface of the wipe stack 4 is in an A1 position, the orifice member 8 contacts the front surface of the wipe stack 4 in the A1 position so as to press the front surface of the wipe stack 4. Further, when the height of the wipe stack 4 decreases such that the front surface of the wipe stack 4 moves to an A2 position, the orifice member 8 moves to the A2 position in accordance with the reduction in the height of the wipe stack 4, and contacts the front surface of the wipe stack 4 in the A2 position so as to press the front surface of the wipe stack 4. Furthermore, when the height of the wipe stack 4 decreases such that the front surface of the wipe stack 4 moves to an A3 position, the orifice member 8 moves to the A3 position in accordance with the reduction in the height of the wipe stack 4, and contacts the front surface of the wipe stack 4 in the A3 position so as to press the front surface of the wipe stack 4. Hence, the orifice member 8 presses the front surface of the wipe stack 4 regardless of variation in the height of the wipe stack 4.

The wipe container 2 is maintained in this condition, in which the front surface of the wipe stack 4 is pressed by the biasing force generated by the elastic force of the orifice member 8, and therefore the wipe stack 4 does not collapse inside the wipe container 2. Moreover, when the height of the wipe stack 4 is in a reduced condition, the orifice member 8 is tilted relative to a direction in which the wipes 4a are pulled out, and therefore strong frictional resistance is exerted on the wipe 4a passing through the orifice 8a by the orifice 8a. As a result, the foremost wipe 4a can be separated from the wipe stack 4 in an appropriate position and extracted reliably.

Note that in this embodiment, the orifice member 8 is described as being supported in a cantilevered fashion, but as long as the orifice member 8 can be pressed against the front surface of the wipe stack 4, the present invention is not limited thereto.

The wipe container 2 according to the present invention may be a so-called refillable type that can be refilled with a new wipe stack 4 when the wipe stack 4 is used up, or a so-called disposable type that cannot be refilled in the manner described above.

The wipe container holder 3 holds the wipe container 2, and includes a seat plate 11, and a back plate 12 and a side plate 13 erected on the seat plate 11. In this embodiment, the seat plate 11, the back plate 12, and the side plate 13 are molded integrally, but the seat plate 11, the back plate 12, and the side plate 13 may be formed separately and assembled, or configured otherwise.

The seat plate 11, the back plate 12, and the side plate 13 are formed from a rigid plastic material or the like, for example. The seat plate 11, the back plate 12, and the side plate 13 may be formed from identical materials or different materials.

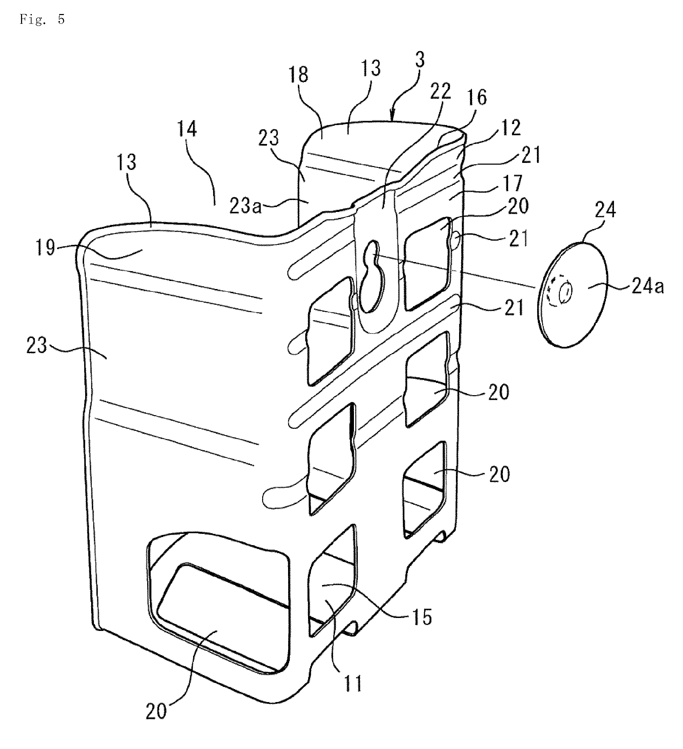

As shown in FIGS. 2 and 5, the wipe container holder 3 is formed such that a front surface thereof in an x direction shown in FIG. 2 is open. Further, in the wipe container holder 3, a storage space 14 for storing the wipe container 2 is formed in a part surrounded by the seat plate 11, the back plate 12, and the side plate 13. A seating surface 15 is formed on the storage space 14 side of the seat plate 11, an inner back surface 16 is formed on the storage space 14 side of the back plate 12, and an inside surface 18 is formed on the storage space 14 side of the side plate 13. Furthermore, an outer back surface 17 is formed on an opposite side of the back plate 12 to the inner back surface 16, and an outside surface 19 is formed on an opposite side of the side plate 13 to the inside surface 18.

Moreover, an opening portion 20 is formed in the seat plate 11, the back plate 12, and the side plate 13. The opening portion 20 is provided to reduce an overall weight of the wipe container holder 3. Furthermore, when the wipe dispenser 1 is of a type that allows the wipe container 2 to be replaced after use, the opening portion 20 also facilitates removal of the used wipe container 2 from the storage space 14.

Further, a rib 21 is formed on the back plate 12. The rib 21 is provided to reinforce the wipe container holder 3, and is formed as a raised ridge that projects inwardly from the outside of the back plate 12. In other words, a part of the back plate 12 in which the rib 21 is formed has a recessed shape when seen from the outer back surface 17 side of the back plate 12, and a projecting shape when seen from the inner back surface 16 side of the back plate 12. Note that in this embodiment, a plurality of ribs 21 are formed on the back plate 12, but there are no particular limitations on the number of formed ribs 21. There are also no particular limitations on the shape of the rib 21 and the direction in which the rib 21 is raised. Furthermore, in this embodiment, the rib 21 is formed only on the back plate 12, but the rib 21 may be formed on the seat plate 11 and the side plate 13 as well as the back plate 12.

Further, an attachment portion 22 is formed on the back plate 12. The attachment portion 22 is used to attach an attachment member, to be described below, and in this embodiment is formed on the back plate 12 of the wipe container holder 3. Furthermore, in this embodiment, the attachment portion 22 is formed as a recessed portion recessed from the outer back surface 17 of the back plate 12, and a hole is opened in the recessed portion. Note that the attachment portion 22 may be formed in a different shape as long as the attachment portion 22 can attach the attachment member fixedly. Moreover, a formation position of the attachment portion 22 need not be located on the back plate 12.

The side plate 13 is provided in a pair formed to oppose each other in a y direction shown in FIG. 2. A fixing portion 23 is formed on each side plate 13. The fixing portion 23 projects from the inside surface 18 of the side plate 13 such that a projecting surface 23a is formed on the storage space 14 side. Thus, when the wipe container 2 is stored in the storage space 14, the stored wipe container 2 is gripped between the wipe container 2 or the like, and as a result, the wipe container 2 can be fixed within the storage space 14. A projection amount of the fixing portion 23 may be set as desired, but a ratio of a single side dimension relative to an overall width dimension is preferably between 1 and 5%. By setting the projection amount of the fixing portion 23 in this range, the wipe container 2 can be attached to and detached from the storage space 14 easily and securely. Further, an interval between the two fixing portions 23 is preferably set to be identical to or smaller than a width of the wipe container 2. By forming the fixing portions 23 to have this interval, the wipe container 2 can be gripped by the wipe container holder 3, and as a result, the wipe container holder 3 can hold the wipe container 2 more securely. Note that this embodiment is configured such that only the fixing portions 23 are formed, but to ensure that the wipe container 2 is fixed within the storage space 14 securely, the wipe container 2 and the wipe container holder 3 may be fixed using fixing means such as an adhesive or adhesive tape. For example, when the fixing means is an adhesive, the adhesive may be applied to the projecting surface 23a, and when the fixing means is adhesive tape, the adhesive tape may be adhered to the projecting surface 23a. When an adhesive is used as the fixing means in particular, a hot melt adhesive is preferably used to ensure that the projecting surface 23a and the wipe container 2 are adhered to each other tightly.

The attachment member is used to attach the wipe container holder 3 to an installation location such as a wall W. As long as the attachment member is capable of attaching the wipe container holder 3 to the wall W or the like, a conventional member may be used as desired, for example a suction cup 24, a magnet, double-sided tape, or a screw. Here, an example in which the suction cup 24 is used as the attachment member will be described.

The suction cup 24 is configured to be attached to the attachment portion 22 of the wipe container holder 3. When the suction cup 24 is attached to the attachment portion 22, an adsorption surface 24a thereof faces the rear of the wipe container holder 3. The wipe container holder 3 is attached fixedly to the wall W, a pillar, or the like positioned behind the wipe container holder 3 via the suction cup 24. Note that the suction cup 24 may be attached singly or in a plurality. For example, when the wipe container holder 3 is fixed to the wall W or the like using a plurality of suction cups 24, the wipe container holder 3 does not shake, and can therefore be used in an extremely stable condition. Furthermore, in this embodiment, the attachment portion 22 is provided on the back plate 12 of the wipe container holder 3, and therefore provided on the rear of the wipe container holder 3, but is not limited thereto.

In the wipe dispenser 1 configured as described above, the wipe container 2 is stored in the storage space 14 of the wipe container holder 3 by being moved in a B direction shown in FIG. 2. In this embodiment, the fixing portions 23 are formed on the side plates 13, and therefore, when the wipe container 2 is stored in this manner, as shown in FIG. 1, side faces of the wipe container 2 can be gripped between the fixing portions 23. Hence, by providing the fixing portion 23, the wipe container 2 can be fixed securely within the storage space 14.

Further, the wipe container holder 3 requires both strength and flexibility in order to store and hold the wipe container 2 in the storage space 14. In this embodiment, the wipe container holder 3 can be made flexible by forming the opening portion 6 in the seat plate 11, the back plate 12, and the side plates 13, and can be strengthened by forming the ribs 21 on the back plate 12. In other words, according to this embodiment, the wipe container holder 3 can be provided with both strength and flexibility by forming the opening portion 6 and the ribs 21. Moreover, by forming the opening portion 6 in the wipe container holder 3, an amount of material required to manufacture the wipe container holder 3 can be reduced, enabling a reduction in manufacturing costs.

Furthermore, this embodiment includes the attachment portion 22 to which the suction cup 24 can be attached, and therefore the wipe dispenser 1 can be attached to the wall W or the like serving as the installation location by attaching the suction cup 24 to the attachment portion 22. With the wipe container holder 3 and the wipe dispenser 1 according to this embodiment, therefore, an amount of space required to install the wipe container holder 3 and the wipe dispenser 1 can be reduced, and the wipe container holder 3 and the wipe dispenser 1 can be used in a wide variety of ways, such as while hanging on the wall W, a pillar, or the like. Further, by configuring the wipe container holder 3 in this manner, the user can extract a single wipe 4a by pulling the wipe 4a with one hand, and an amount of force required to pull out the wipe 4a can be reduced. Moreover, the user does not have to expend effort on extracting the wipe 4a, and therefore the wipe container holder 3 can be handled with ease. Furthermore, in the wipe container holder 3 according to this embodiment, the attachment portion 22 is formed in a recessed shape, and therefore an interval between a surface of the wall W and the outer back surface 17 of the wipe container holder 3 can be reduced when the wipe container holder 3 is adsorbed to the wall W or the like using the suction cup 24, for example. Hence, troublesome situations in which the wipe container holder 3 moves greatly about the attachment portion 22 relative to the installation location such as the wall W during an operation to extract the wipe 4a can be eliminated, and as a result, effort expended during use can be further reduced. Moreover, in this embodiment, the x direction front surface of the storage space 14 is open such that a front surface of the wipe container 2 is not covered by the seat plate 11 and the side plates 13, and therefore the entire front surface of the wipe container 2 can be exposed. As a result, various pictures, patterns, and the like depicted on the front surface and so on of the wipe container 2 can be seen easily by the user.

Note that in this embodiment, the wipe container 2 is gripped by forming the fixing portions 23 on the side plates 13, but fixing means such as an adhesive or adhesive tape may be provided on at least the projecting surfaces 23a of the fixing portions 23. In so doing, the wipe container 2 is gripped by the fixing portions 23 so as to be held in a stored condition, and the fixing portions 23 are fixed securely to the wipe container 2 by the fixing means.

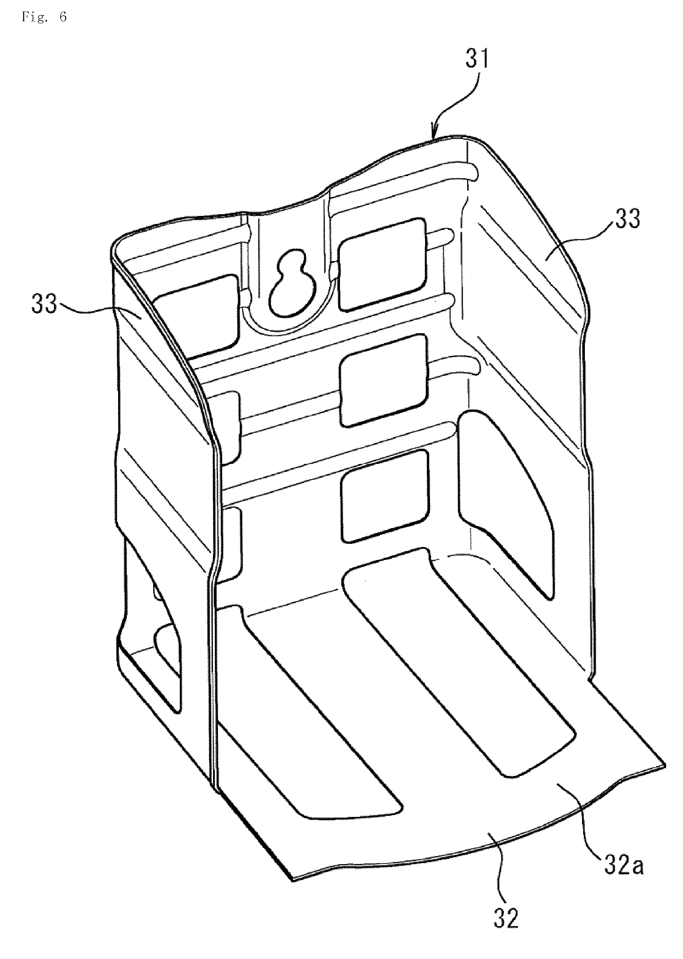

Next, a modified example of the wipe container holder according to the present invention will be described on the basis of FIG. 6. Note that parts of the configuration of the wipe container holder that are identical to the parts described above will not be described.

As shown in FIG. 6, a wipe container holder 31 according to this modified example differs from the example described above in the configuration of the seat plate. More specifically, the wipe container holder 31 according to this modified example is configured such that a seat plate 32 includes an extension portion 32a that extends frontward in the x direction. Accordingly, a width of the seat plate 32 is greater than an x direction length of a side plate 33 provided on either y direction side of the seat plate by an amount corresponding to the extension portion 32a, and the seat plate 32 is formed to extend from respective end portions of the side plates 33.

In this modified example, in addition to the effects described above, the wipe container holder and the wipe dispenser can be handled with even greater ease. More specifically, the wipe container holder and wipe dispenser according to this modified example do not rotate when a wipe is extracted from the wipe container, and therefore no effort need be expended on resetting the wipe dispenser to its original position every time a wipe is extracted. As a result, the wipe container holder and the wipe dispenser can be handled with greater ease.

The configurations, actions, and effects of the wipe container holder and wipe dispenser according to the present invention were described in detail above. However, the present invention is not limited to the above embodiment, and includes all aspects in the concepts of the inventions described in the claims.

### EXPLANATION OF REFERENCE NUMERALS

- 1: wipe dispenser
- 2: wipe container
- 3, 31: wipe container holder
- 4: wipe stack
- 4a: wipe
- 5: wipe extraction hole
- 7: extraction hole member
- 8: orifice member
- 11, 32: seat plate
- 12: back plate
- 13, 33: side plate
- 14: storage space
- 20: opening portion
- 21: rib
- 23: fixing portion

## Claims

1. A wipe container holder comprising a seat plate, and a back plate and a side plate erected on said seat plate,
wherein a fixing portion for fixing a wipe container is provided on at least one of said seat plate, said back plate, and said side plate.

2. The wipe container holder according to claim 1, wherein said side plate is formed in a pair.

3. The wipe container holder according to claim 1 or 2, wherein said fixing portion is formed to project further inward than inside surfaces of said side plates.

4. The wipe container holder according to any of claims 1 to 3, wherein said seat plate is formed to extend further frontward than said side plates.

5. The wipe container holder according to any of claims 1 to 4, wherein an attachment portion with which said wipe container holder can be attached to a location for installing said wipe container holder is provided on one of said seat plate, said back plate, and said side plates.

6. A wipe dispenser in which said wipe container holder according to any of claims 1 to 5 holds a wipe container.

7. The wipe dispenser according to claim 6, wherein a wipe stack formed by stacking a plurality of wipes is housed in an interior of said wipe container,
an orifice is provided in said wipe container to apply resistance to a wipe extracted from said wipe container, and
a biasing force is exerted on an orifice member in which said orifice is formed from a wipe extraction hole side in a direction for pressing said orifice member against a front surface of said wipe stack such that when said wipe is pulled out through said wipe extraction hole, leading to a reduction in a height of said wipe stack, said orifice member is pressed against said front surface of said wipe stack by said biasing force.
